Europäisches Patentamt

European Patent Office

Office européen des brevets

(19)

(11) Publication number: **0 190 639 B1**

(12) **EUROPEAN PATENT SPECIFICATION**

(45) Date of publication of patent specification: **26.06.91**  (51) Int. Cl.⁵: **G01D 5/16**, G01D 5/249, F02P 7/06

(21) Application number: **86101060.1**

(22) Date of filing: **27.01.86**

(54) **A crank angle sensor.**

(30) Priority: **08.02.85 JP 23305/85**

(43) Date of publication of application:
**13.08.86 Bulletin 86/33**

(45) Publication of the grant of the patent:
**26.06.91 Bulletin 91/26**

(84) Designated Contracting States:
**DE FR GB IT SE**

(56) References cited:
**EP-A- 0 098 551**
**WO-A-82/00888**
**US-A- 4 262 526**
**US-A- 4 418 372**

(73) Proprietor: **HITACHI, LTD.**
**6, Kanda Surugadai 4-chome**
**Chiyoda-ku, Tokyo 101(JP)**

(72) Inventor: **Takahashi, Tadashi**
**1415-7, Ishinazaka-cho**
**Hitachi-shi Ibaraki 319-12(JP)**
Inventor: **Miyashita, Kunio**
**45-15, Nishi-narusawa-cho 4-chome**
**Hitachi-shi Ibaraki 316(JP)**
Inventor: **Kawamata, Syooichi**
**19-34, Namekawa-hon-cho 4-chome**
**Hitachi-shi Ibaraki 317(JP)**

(74) Representative: **Altenburg, Udo, Dipl.-Phys. et al**
**Patent- und Rechtsanwälte Bardehle-Pagenberg-Dost-Altenburg-Frohwitter & Partner Postfach 86 06 20**
**W-8000 München 86(DE)**

EP 0 190 639 B1

## Description

### BACKGROUND OF THE INVENTION

#### Field of The Invention

The present invention relates to a crank angle sensor which detects the angular position of a crank shaft of an internal combustion engine, and particularly to the one for which magnetoresistive elements are used.

#### Description of The Related Art

Crank angle sensors using magnetoresistive elements are disclosed in Japanese Patent Laid-Open No.57-133311. The crank angle sensor disclosed therein uses, for example, 3 disks with the same diameter, the peripheries of which are circumferentially devided into equal sections of n, n x $2^1$ and n x $2^2$ respectively for the number n of cylinders of an engine. Each section thus devided is provided selectively with either one of mangetic polarities N and S. Those disks are piled up coaxially to form a cylindrical rotor of the sensor. As a result, codes consisting of 3 bits arranged in the axial direction are circumferentially distributed on the whole surface of the cylindrical rotor. Each code is formd by magnetic polarities N and S which are made to correspond to logical "1" and "0", respectively. A stator of the sensor made of a magnetoresistive element is faced to the cylindrical rotor so as to detect the magnetic polarities provided on the circumferential surface of each disk. Since the rotor of the sensor is rotated in synchronism with the rotation of a crank shaft of the engine, the code detected by the sensor indicates the angular position of the crank shaft.

However, the apparatus as described above has the following problem. Namely, a mutual magnetic interference occurs between the disks of the rotor, since the disks having different N-S pitch are piled up closely and moreover the difference in the N-S pitch between the disks is large. Further, there is another problem in that the signal edge becomes dull and the accuracy is reduced when the pitch of the magnetic pole is long. Although the edge of a signal becomes sharp and accuracy is excellent when said pitch of the magnetic pole is short, the shorter pitch of magnetic pole makes the mutual intereference more seriously.

Further, a crank angle sensor for use in the engine control must be able to detect not only the angular position of the crank shaft but also other signals, such as a reference signal indicating a reference position of the crank shaft or cylinder signal for discriminating every cylinders. To this end, Japanese Utility Model Laid-Open No.55-179317 is known, for example. According to thereto, informations for the angular position and the reference position of the crank shaft are provided by magnetic poles arranged separately in two rows on the circumferential surface of a cylindrical rotor. Also in such an apparatus, there occurs the same problem as the former application, since the N-S magnetic pole pitch for the reference position information is different from that for the angular position information to a large extent. If the magnetic pole pitch of the two kinds of information is made equal, another problem will occur in that the output pulse width of the two kinds of information will be equal. It is necessary in the engine control that the pulse width of the angular position information is several times narrower than that of the reference position information.

### SUMMARY OF THE INVENTION

An object of the present invention is to provide a crank angle sensor in which magnetic signals recorded on a magnetic recording medium rotating in synchronism with the rotation of a crank shaft of an engine are detected by a magnetic sensor provided with an appropriate gap opposite to the magnetic recording medium, whereby various kinds of signals depending on the rotation of the engine including a signal of the angular position of the crank shaft can be produced accurately without being affected by the magnetic interference between the magnetic signals recorded on the magnetic medium.

The features of the present invention that are necessary to achieve such a crank angle sensor are defined in the accompanying Claim 1. This claim is in a two-part form having regard to US-A-4262 526 that is concerned with an apparatus for detecting the rotational position of a crank shaft of an internal combustion engine. Thus, the features that appear in the pre-characterizing portion of the accompanying Claim 1 can also be found in US-A-4 262 526.

### BRIEF DESCRIPTION OF THE DRAWING

Fig. 1 schematically shows an entire structure of a crank angle sensor for an internal combustion engine to which the present invention is applied;

Fig. 2 are developed views of a magnetic recording medium and a magnetic sensor showing an embodiment of the present invention;

Fig. 3 is a circuit diagram for taking out signals from the magnetic sensor shown in Fig. 2;

Fig. 4 is a waveform diagram of outputs of the circuit shown in Fig. 3;

Fig. 5 is a block diagram showing an apparatus for specifying a particular cylinder of the engine on the basis of outputs of the circuit shown in
Fig. 3;

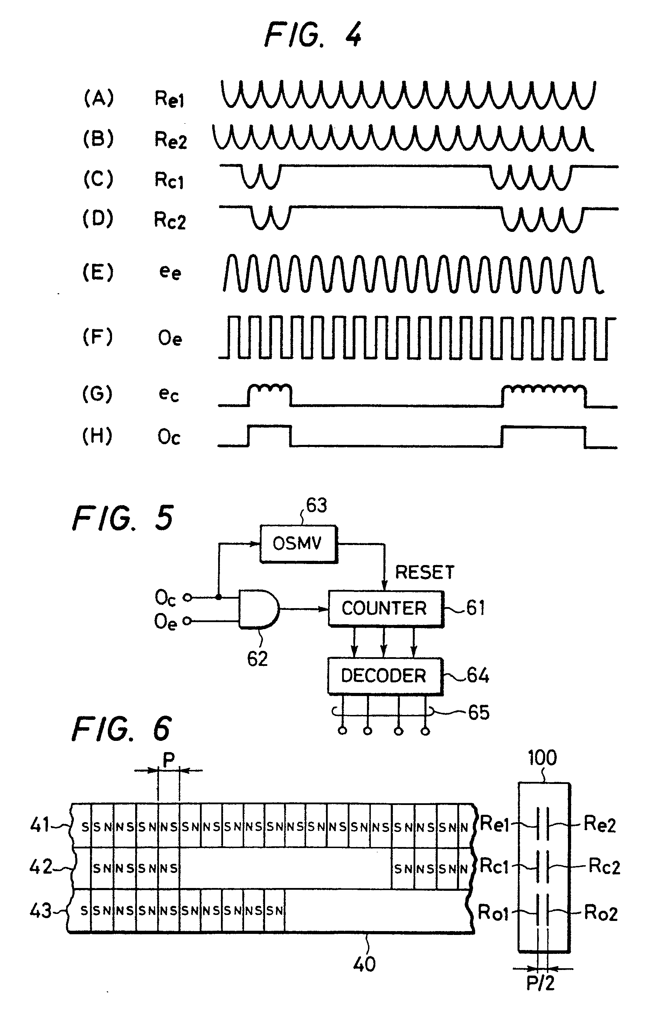

Fig. 6 is developed views of a magnetic recording medium and a magnetic sensor showing
another embodiment of the present invention;

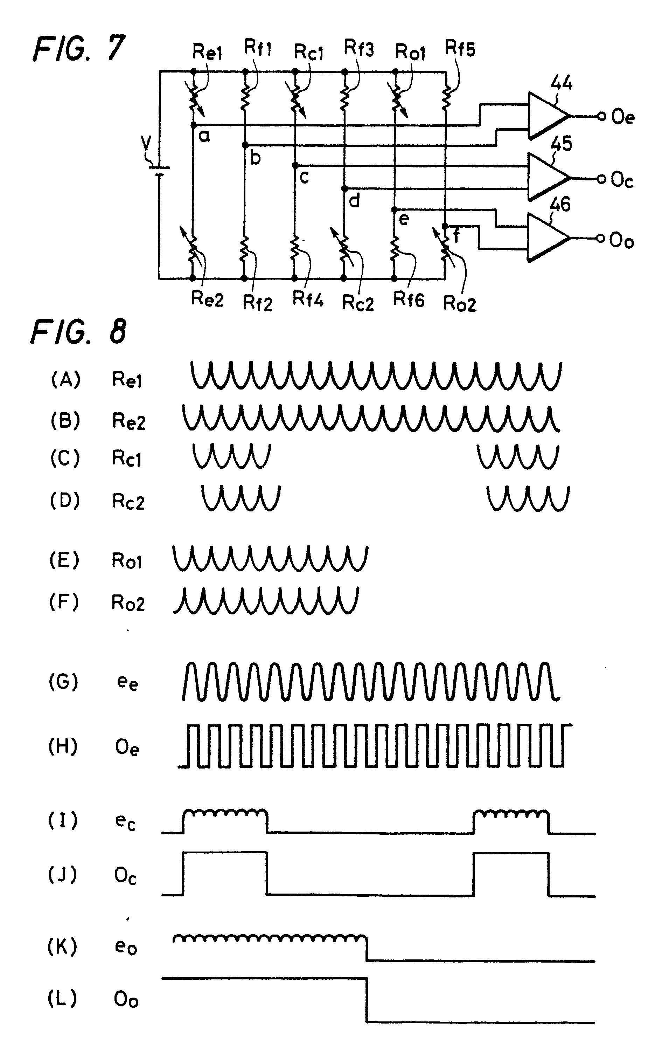

Fig. 7 is a circuit diagram for taking out signals
from the magnetic sensor of the embodiment of
Fig. 6;
Fig. 8 is a waveform diagram of outputs of the
circuit shown in Fig. 7;

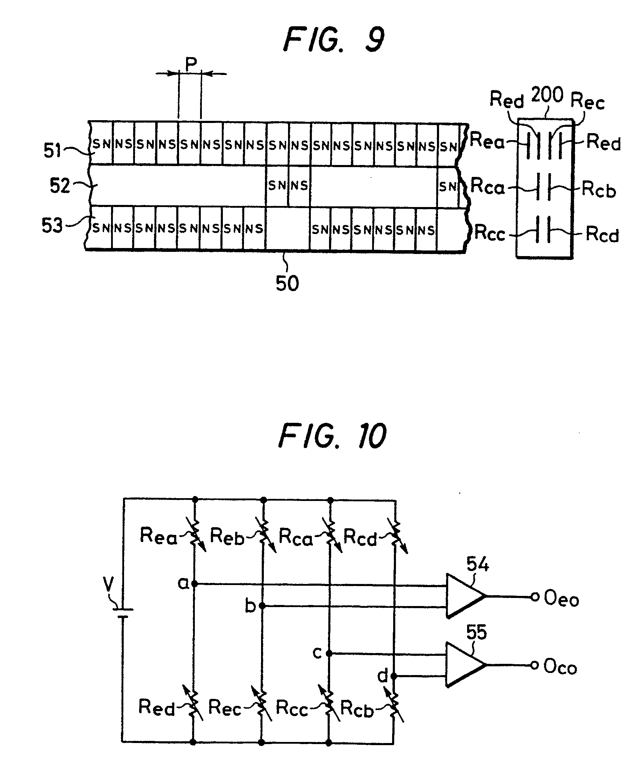

Fig. 9 is developed views of a magnetic recording medium and a magnetic sensor showing still
another embodiment of the present invention;
Fig. 10 is a circuit diagram for taking out signals
from the magnetic sensor of the embodiment of
Fig. 9; and

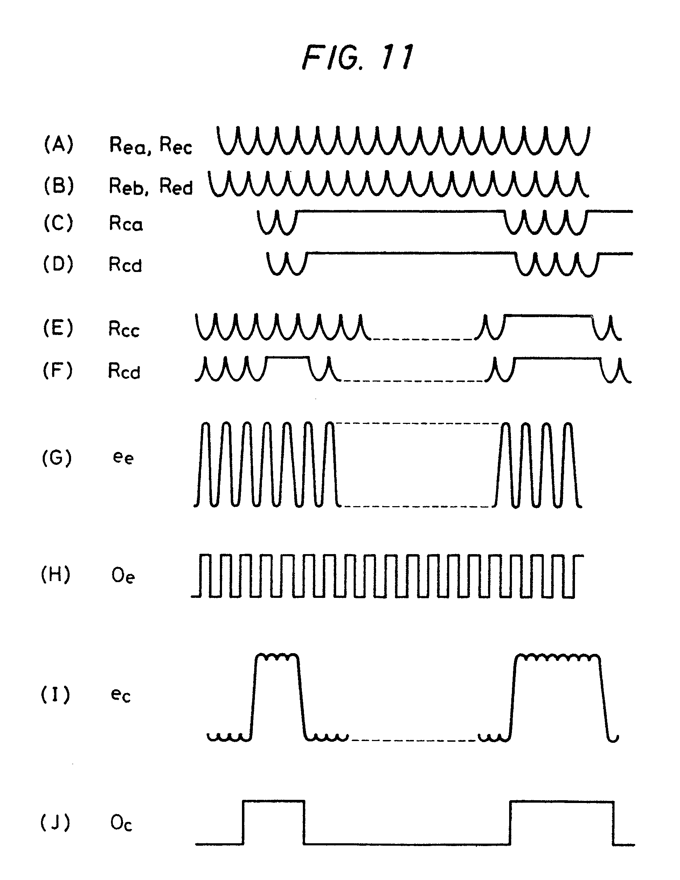

Fig. 11 is a waveform diagram of outputs of the
circuit shown in Fig. 10.

## DESCRIPTION OF THE PREFERRED EMBODIMENTS

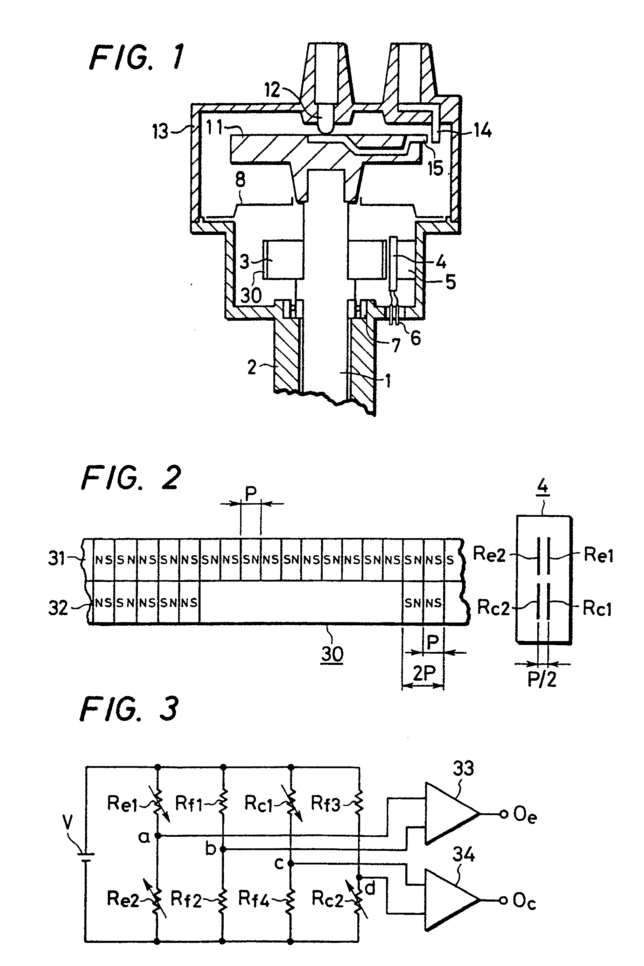

In Fig. 1, a reference numeral 1 denotes a
shaft rotating in synchronization with an engine (not
shown) and at a speed of rotation half of that of the
engine. A reference numeral 2 denotes a housing
and 3 a nonmagnetic drum directly joined to the
shaft 1. A magnetic recording medium 30 of a
magnetic material is fitted on the surface of the
nonmagnetic drum 3. A reference numeral 4 denotes a magnetic sensor formed of magnetoresistive elements and fitted to the housing 2 by means
of a fitting block 5. Moreover, a reference numeral
6 denotes an output terminal for taking out signals
from the magnetic sensor 4 and reference numeral
7 denotes a bearing. A reference numeral 8 denotes a shield plate for absorbing magnetic noise
or field noise generated by a side electrode 14, a
distributor electrode 15 and a central electrode 12
which are provided for distributing a high voltage
for ignition. A reference numeral 11 denotes a
distributor rotor and 13 a case.

Fig. 2 shows developed views of the magnetic
recording medium 30 and the magnetic sensor 4
shown in Fig. 1. The magnetic recording medium
30 is divided into two tracks, and unit N-S magnetic poles are recorded consecutively at a pitch P
on the whole circumference of one of the tracks
which is called an angle track 31. On the other
track, signals in the number of cylinders of the
engine are recorded corresponding to the respective cylinders. This track is called a cylinder track
32. In the case of the crank angle sensor for a four-
cylinder engine, each one of these signal sets
recorded on the cylinder track 32 is composed of
two to five consecutive unit magnetic poles of N-S.
The polarity N or S of the unit magnetic poles on
the cylinder track 32 is provided so that it is in the same arrangement as the polarity N or S of the
adjacent unit magnetic poles of the angle track 31
which is layered with the cylinder track 32. Accordingly, no magnetic interference occurs between the
angle track 31 and the cylinder track 32.

In the magnetic sensor 4 facing the magnetic
recording medium 30 as stated above, mag-
netoresistive elements $R_{e1}$ and $R_{e2}$ are disposed
opposite to the angle track 31 and separated by a
pitch of P/2, as shown in Fig. 2, where P is the
pitch of the unit magnetic poles and corresponds to
an angle to be detected in the rotation of the crank
shaft. Moreover, magnetoresistive elements $R_{c1}$
and $R_{c2}$ are disposed opposite to the cylinder track
32 and separately from each other by a pitch of
P/2. These magnetoresistive elements $R_{e1}$, $R_{e2}$, $R_{c1}$
and $R_{c2}$ are formed of a thin film of a ferromagnetic
substance and have such a property that the electric resistance thereof lowers when a magnetic field
is applied at a right angle to the direction of a
current. As the magnetic recording medium 30 is
rotated, therefore, a change in resistance corresponding to the magnetic signals on each of the
tracks 31 and 32 occurs in each of the mag-
netoresistive elements $R_{e1}$, $R_{e2}$, $R_{c1}$ and $R_{c2}$.

The magnetoresistive elements $R_{e1}$, $R_{e2}$, $R_{c1}$
and $R_{c2}$ constituting the magnetic sensor 4 are
connected as shown in Fig. 3. The magnetoresis-
tive elements $R_{e1}$ and $R_{e2}$ are connected in series,
and bothe ends of the series connection are connected to a power source V. Moreover, a connecting point a of the magnetoresistive elements $R_{e1}$
and $R_{e2}$ is led to one input terminal of a voltage
comparator 33. The other input terminal of this
voltage comparator 33 is connected with a connecting point b of a series connection formed of
two fixed resistances $R_{f1}$ and $R_{f2}$ which is connected to the power source V. Accordingly, a
bridge is constructed by the magnetoresistive ele-
ments $R_{e1}$ and $R_{e2}$ and the fixed resistances $R_{f1}$
and $R_{f2}$. A series circuit of the magnetoresistive
element $R_{c1}$ and a fixed resistance $R_{f4}$ and a series
circuit of a fixed resistance $R_{f3}$ and the magnetoresistive element $R_{c2}$ are connected at both
ends thereof to the power source V respectively,
and a bridge is formed with respective connecting
points c and d of those series circuits serving as
output terminals. The output terminals of this
bridge are connected to the input terminals of a
voltage comparator 34 respectively.

When the magnetic recording medium 30 is
rotated, the resistances of the magnetoresistive
elements $R_{e1}$, $R_{e2}$, $R_{c1}$ and $R_{c2}$ of the magnetic
sensor connected in this way and the voltages
appearing across the points a, b and c, d take
waveforms respectively as shown in Fig. 4. In detail, the resistances of the magnetoresistive ele-
ments $R_{e1}$ and $R_{e2}$ change in accordance with the change in the magnetic field caused by the angle track 31 of the rotating magnetic recording medium 30, as shown in Figs. 4 (A) and (B), and thus the resistance changes in one cycle every pitch P of the unit magnetic poles. Changes in the resistance occur in a phase difference of 180 degrees, since there is a pitch difference of a P/2 between the magnetoresistive elements $R_{e1}$ and $R_{e2}$. The resistances of the magnetoresistive elements $R_{c1}$ and $R_{c2}$ also change in accordance with the signals of the cylinder track 32, in the same way as those of the magnetoresistive elements $R_{e1}$ and $R_{e2}$, as shown in Figs. 4 (C) and (D).

The voltage $e_e$ appearing across the points a, b of the resistance bridge which is formed by the magnetoresistive elements $R_{e1}$ and $R_{e2}$ and the fixed resistances $R_{f1}$ and $R_{f2}$ becomes as shown in Fig. 4 (E), and the output $O_e$ of the voltage comparator 33 shown in Fig. 3 turns to be an output of a square wave as shown in Fig. 4 (F). Since the output $O_e$ as show in Fig. 4 (F) is generated corresponding to an angle determined by the length of the pitch of the magnetic pole and the length of the circumference of the nonmagnetic drum 3, an angle from a reference point set beforehand can be measured by a method in which the output pulse of the voltage comparator 33 is counted from the reference point.

The voltage $e_c$ appearing across the points c, d of the resistance bridge including the magnetoresistive elements $R_{c1}$ and $R_{c2}$ becomes as shown in Fig. 4 (G). The edge portion of the waveform of this voltage $e_c$ takes a sharp form corresponding to the pitch P of the unit magnetic pole, and the same accuracy with that of the angle signal is attained. When the waveform as shown in Fig. 4 (G) is shaped by the voltage comparator 34, the output $O_c$ delivered therefrom becomes a square wave as shown in Fig. 4 (H). The output $O_c$ as shown in Fig. 4 (H) is output corresponding to a cylinder, and thus it is possible to determine which output is the cylinder signal of a given cylinder, by changing the pulse width of the output $O_c$ from the voltage comparator 34 for each cylinder.

Here it is to be noted that there always occur an integral number of pulses of the angle signal as shown in Fig. 4 (F) during the pulse duration of the cylinder signal as shown in Fig. 4 (H). This will be easily understood from the structure of the angle track 31 and the cylinder track 32 shown in Fig. 2. Therefore, a particular cylinder is specified by counting the pulses of the angle signal $O_e$ during the pulse width of the cylinder signal $O_c$, in other words, by measuring the pulse width of the cylinder signal $O_c$ by means of the pulses of the angle signal $O_e$.

An example of an apparatus for that purpose is shown in Fig. 5. An apparatus comprises a counter 61 which counts the pulses of the angle signal $O_e$ applied through an AND gate 62. In the case of the example shown in Fig. 2 where two to five unit magnetic poles are provided in the cylinder track 32 corresponding to the respective cylinders of the four cylinder engine, there exist 5 pulses of the angle signal for the widest pulse of the cylinder signal $O_c$. Accordingly, a three bit counter is sufficient for the counter 61. The AND gate is also supplied as a gate signal with the pulses of the cylinder signal $O_c$. There is further provided an one shot multivibrator 63. The multivibrator 63 is triggered by the trailing edge of the cylinder signal pulse $O_c$, and a reset pulse of the counter 61 is produced by the trailing edge of the output of the multivibrator 63. Accordingly, the reset pulse of the counter 61 is delayed by the time constant of the multivibrator 63 from the end of the cylinder signal pulse. Therefore, the counter 61 repeatedly counts the pulses of the angle signal $O_e$ existing during the duration of every pulses of the cylinder signal $O_c$. The content of the counter 61 is led to a decoder 64, wherein the counted value is decoded and the result appears on terminals 65. A cylinder is specified by a signal appearing on each of the terminals 65.

This method in which the duration of the cylinder signal $O_c$ is measured by the pulses of the angle signal $O_e$ has the following advantage. The duration of the cylinder signal $O_c$ varies in accordance with the rotational speed of the engine. If, therefore, the duration of this signal $O_c$ is measured by time, for example, by using clock pulses, the measured value with respect to the same cylinder changes in dependence on the change in the rotational speed of the engine, so that it becomes difficult to specify a particular cylinder. In this embodiment, however, it is easy, in spite of the variation in the rotational speed of the engine, to specify a particular cylinder, because there always exist the fixed number of pulses of the angle signal $O_e$ for the respective pulses of the cylinder signal $O_c$, as mentioned before.

Another embodiment of the present invention is shown in Fig. 6. This embodiment differs from the embodiment of Fig. 2 in that a reference position track for detecting one reference position information for each rotation of the crank shaft is provided on a magnetic recording medium 40 in addition to the angle track presenting angle informations proportional to angles and the cylinder track presenting cylinder information. Fig. 6 shows developed views of the magnetic recording medium 40 and a magnetic sensor 100. In this magnetic recording medium 40 an angle track 41 and a cylinder track 42 are provided in the same way as in the magnetic recording medium 30 of Fig. 2, and also angle signals and cylinder signals are recorded on these two tracks in the same way as in the magnetic recording medium 30 of Fig. 2. However, in this embodiment, there are provided on the cylinder track 42 the same number of the unit magnetic poles for every cylinder. Namely, four unit magnetic poles are provided for each cylinder, as shown in Fig. 6. The reason for this will become apparent later.

Moreover, a reference position track 43 for preparing one signal for each rotation of the crankshaft as a reference signal to serve as a reference for every signals is provided as a third track. On this reference position track 43, unit magnetic poles having the same pitch P as that of the unit magnetic poles used on the foregoing two tracks 41 and 42 are provided continuously in a half of the circumference, while nothing is recorded in the other half thereof. In the magnetic sensor 100 facing the mangetic recording medium 40, the magetic reluctance elements $R_{e1}$ and $R_{e2}$ are disposed corresponding to the angle track 41, and the magnetoresistive elements $R_{c1}$ and $R_{c2}$ corresponding to the cylinder track 42, in the same way as those in Fig. 2, while magnetoresistive elements $R_{o1}$ and $R_{o2}$ are disposed corresponding to the reference position track 43 in such a manner that they are spaced from each other by a pitch of P/2 which is a half of the unit magnetic pole pitch P. These magnetoresistive elements $R_{e1}$, $R_{e2}$, $R_{c1}$, $R_{c2}$, $R_{o1}$ and $R_{o2}$ are connected so that they form three resistance bridges together with fixed resistances $R_{f1}$ to $R_{f6}$ as shown in Fig. 7.

One end of the magnetoresistive elements $R_{e1}$, $R_{c1}$ and $R_{o1}$ and the fixed resistances $R_{f1}$, $R_{f3}$ and $R_{f5}$ are connected commonly to one of the terminals of a power source V. The magnetoresistive element $R_{e2}$ is connected to the other end of the magnetoresistive element $R_{e1}$, the fixed resistance $R_{f2}$ to that of the fixed resistance $R_{f1}$, the fixed resistance $R_{f4}$ to that of the magnetoresistive element $R_{c1}$, the magnetoresistive element $R_{c2}$ to that of the fixed resistance $R_{f3}$, the fixed resistance $R_{f6}$ to that of the magnetoresistive element $R_{o1}$, and the magnetoresistive element $R_{o2}$ to that of the fixed resistance $R_{f5}$, respectively. The other ends of these magnetoresistive elements $R_{e2}$, $R_{c2}$ and $R_{o2}$ and fixed resistances $R_{f2}$, $R_{f4}$ and $R_{f6}$ are connected to the other terminal of the power source V.

One input terminal of a voltage comparator 44 is connected to a connecting point a of the magnetoresistive element $R_{e1}$ and $R_{e2}$, while the other input terminal thereof is connected to a connecting point b of the fixed resistances $R_{f1}$ and $R_{f2}$. These magnetoresistive elements $R_{e1}$ and $R_{e2}$ and fixed resistances $R_{f1}$ and $R_{f2}$ form one bridge together. One input terminal of a voltage comparator 45 is connected to a connecting point c of the magnetoresistive element $R_{c1}$ and the fixed resistance $R_{f4}$, while the other input terminal thereof is connected to a connecting point d of the fixed resistance $R_{f3}$ and the magnetoresistive element $R_{c2}$. Thus, one bridge is formed by the magnetoresistive elements $R_{c1}$ and $R_{c2}$ and the fixed resistances $R_{f3}$ and $R_{f4}$. Similarly, one input terminal of a voltage comparator 46 is connected to a connecting point e of the magnetoresistive element $R_{o1}$ and the fixed resistance $R_{f6}$, while a connecting point f of the fixed resistance $R_{f5}$ and the magnetoresistive element $R_{o2}$ is connected to the other input terminal of the voltage comparator 46. These magnetoresistive elements $R_{o1}$ and $R_{o2}$ and fixed resistances $R_{f5}$ and $R_{f6}$ form one bridge together.

When the magnetic recording medium 40 is rotated, the resistances of the magnetoresistive elements $R_{e1}$, $R_{e2}$, $R_{c1}$, $R_{c2}$ $R_{o1}$ and $R_{o2}$ change as shown in Figs. 8 (A), (B), (C), (D), (E) and (F). As a result, across the points a and b, c and d, and e and f of the bridges shown in Fig. 6, the output voltages $e_e$, $e_c$ and $e_o$ as shown in Figs. 8 (G), (I) and (K) are obtained. The signals $e_e$, $e_c$ adn $e_o$ shown in Figs. 8 (G), (I) and (K) are input respectively for the voltage comparators 44, 45 and 46. A signal $O_e$ delivered from the output terminal of the voltage comparator 44 is a square wave as shown in Fig. 8 (H). A signal $O_c$ delivered from the output terminal of the volage comparator 45 is a square wave as shown in fig. 8 (J). Moreover, the output appearing across the points e and f takes a waveform as shown in Fig. 8 (K) as described above, so that the edge portion of the waveform is the same as that of an angle signal, and the signal thus obtained is very accurate. The signal shown in Fig. 8 (K) is obtained as a signal $O_o$ as shown in Fig. 8 (L) from the output terminal of the voltage comparator 46. Since the angle information $O_e$ being highly accurate and free from the magnetic interference and the cylinder information $O_c$ and the reference information $O_o$ are obtained as described above, it becomes possible to control an internal combustion engine accurately.

In the embodiment of Fig. 2, a particular cylinder is specified by a method in which the pulse width of the cylinder signal is measured by the number of the angle signal pulses. In this embodiment, however, it is impossible to specify a particular cylinder by means of such a method, because all pulses of the cylinder signal outputted from the voltage comparator 45 have the same pulse width as shown in Fig. 8 (J). This results from the fact that on the cylinder track 42 of this embodiment an equal number of unit magnetic poles is provided for every cylinder. Therefore, in this embodiment, the reference signal $O_o$ as shown in Fig. 8(L) is utilized for the purpose of specifying a particular cylinder. That is to say, the number of the pulses of the cylinder signal $O_c$ is counted from the time point of appearance or disappearance of the reference signal $O_o$, and a particular cylinder can be specified by the counted number.

Still another embodiment of the present invention is shown in Fig. 9. This embodiment differs from the embodiment of Fig. 6 in the way it provides information on the cylinder track and the reference position track in the magnetic recording medium, and in the pattern of the magnetoresistive elements disposed in the magnetic sensor. Fig. 9 shows developed views of a magnetic recording medium 50 and a magnetic sensor 200. In this magnetic recording medium 50 an angle track 51 and a cylinder track 52 are provided in the same way as in the magnetic recording medium 40 of Fig. 6, and angle signals and cylinder signals are recorded on these two tracks in the same way as in the magnetic recording medium 40 of Fig. 6. As a third track, there is further provided a track 53 which, as shown in Fig. 9, has unit magnetic poles in a part corresponding to that part of the cylinder track 52 in which no unit magnetic poles are provided.

In the magnetic sensor 200 provided opposite to the magnetic recording medium 50, magnetoresistive elements $R_{ea}$, $R_{eb}$, $R_{ec}$ and $R_{ed}$ are provided at an interval of pitch P/2, half of the unit magnetic pole pitch P, corresponding to the angle track 51 in the same way as in Fig. 6. Likewise, magnetoresistive elements $R_{ca}$ and $R_{cb}$ are provided at an interval of pitch P/2 corresponding to the cylinder track 52, and further magnetoresistive elements $R_{cc}$ and $R_{cd}$ are provided at an interval of pitch P/2 corresponding to the third track 53. By the magnetoresistive elements $R_{ea}$, $R_{eb}$, $R_{ec}$ and $R_{ed}$ a resistance bridge is formed as shown in Fig. 10. As is apparent from the same figure, another resistance bridge is formed by the remaining magnetoresistive elements $R_{ca}$, $R_{cb}$, $R_{cc}$ and $R_{cd}$. These two bridges are both connected to a power source V. Further, a connecting point a of the elements $R_{ea}$ and $R_{ed}$ and a connecting point b of the elements $R_{eb}$ and $R_{ec}$ are led to two input terminals of a voltage comparator 54, and similarly a connecting point c of the elements $R_{ca}$ and $R_{cc}$ and a connecting point d of the elements $R_{cd}$ and $R_{cb}$ are connected to two input terminals of voltage comparator 55.

When the magnetic recording medium 50 is rotated, the resistances of the magnetoresistive elements $R_{ea}$, $R_{eb}$, $R_{ec}$, $R_{ed}$, $R_{ca}$, $R_{cb}$ $R_{cc}$ and $R_{cd}$ change as shown in Figs. 11 (A), (B), (C), (D), (E) and (F). As a result, the output voltages $e_e$ and $e_c$ as shown in Figs. 11 (G) and (I) appear across the points a and b, and c and d of the bridges shown in Fig. 10. Since the magnetoresistive elements $R_{ea}$, $R_{eb}$, $R_{ec}$ and $R_{ed}$ are provided at the interval of the pitch P/2 on the magnetic sensor corresponding to the angle track 51 of the magnetic recording medium 50 as shown in Fig. 9 and the four arms of the bridge are all formed by the magnetoresistive elements $R_{ea}$, $R_{eb}$, $R_{ec}$ and $R_{ed}$ as shown in Fig. 10, a larger output $e_e$ than that of the bridges of Figs. 3 and 7 can be obtained. Such a construction enables the improvement in S/N ratio and the attainment of a more accurate square wave. The output voltage $e_e$ is led to the voltage comparator 54, so that a signal $O_{eo}$ delivered from the output terminal of the voltage comparator 54 becomes a square wave as shown in Fig. 11 (H). The voltage $e_c$ appearing across the points c and d has a waveform as shown in Fig. 11 (I). The voltage $e_c$ thus obtained has an amplitude twice as large as that of Fig. 8 (I), and the sharpness of the edge thereof is better than that of the output of the bridge of Fig. 7. The output voltage $e_c$ is applied to the voltage comparator 55, so that a signal $O_{co}$ delivered from the output terminal of the voltage comparator 55 becomes a square wave as shown in Fig. 11 (J). Thus, an accurate signal having a sharp edge can be obtained.

In this way, angle information $O_{eo}$ and cylinder information $O_{co}$ being highly accurate and free from the magnetic interference can be obtained according to the present embodiment. A reference signal as shown in Fig. 8 (L) is unnecessary in this case if each cylinder can be made to have a reference by varying the pulse length of the output of the cylinder information $O_{co}$ for each cylinder.

While the magnetic recording medium is shaped in a rotary drum in any of the above described embodiments, quite the same effect can be produced by shaping said medium in a rotary disk, constructing each track concentrically, and disposing also concentrically the magnetic sensor 4 facing the medium.

According to the present invention, as described above, signals having a different output pulse width can be detected with high accuracy, since the edge of a detected signal can be made sharp without causing any magnetic interference, and thus the present invention has the effect that angle signals, cylinder signals and further reference signals of a crank shaft can be detected with high accuracy.

## Claims

1.  A crank angle sensor for generating signals representative of the rotation of a crankshaft of an internal combustion engine having a plurality of cylinders, comprising:
    a magnetic recording medium (30) coupled to the crankshaft so as to rotate in synchronism therewith and containing a plurality of recording tracks including a first track (31), on which data is magnetically recorded in the form of unitary magnetic poles, the magnetic poles of the first track (31) having a pitch P corresponding to the rotational angle of the crankshaft; and

a magnetic sensor (4) spaced apart from said magnetic recording medium (30) and containing magnetoresistive elements (Re1, Re2; Rc1, Rc2) arranged to be magnetically coupled with said magnetic recording medium (30), which processes output signals of the magnetoresistive elements to produce the signals representative of the rotational angle of the crankshaft,

**characterized in**

that in the form of unitary magnetic poles is magnetically recorded on a second track (32), each of the magnetic poles of the second track (32) having the pitch P between the poles thereof and being distributed at prescribed locations along the second track (32) in respective pluralities corresponding to the number of the plural cylinders of the engine with the magnetic polarities thereof oriented in the same manner as those of the respective magnetic poles of the first track (31), and that the magnetoresistive elements of said magnetic sensor are formed in plural pairs of elements (Re1, Re2; Rc1, Rc2), which face the corresponding ones of the recording tracks, the magnetoresistive elements of each pair being spaced apart from one another effectively one-half the pitch P in the direction of relative motion between said magnetic recording medium (30) and said magnetic sensor (4), whereby said magnetic sensor (4) can produce signals indicating the respective cylinders of the engine in addition to the signals representing the rotational angle of the crankshaft.

2. A crank angle sensor as defined in claim 1, wherein at the respective divided locations of the second track (32) there are provided the unit magnetic poles of the different number, whereby a particular cylinder is specified by measuring the duration of an output of a magnetic sensor corresponding to the second track by means of an output of a magnetic sensor corresponding to the first track (31).

3. A crank angle sensor as defined in claim 1, wherein said magnetic recording medium (40) further includes a third track (43) on which data is magnetically recorded in the form of unitary magnetic poles, whereby said magnetic sensor (4) can produce signals indicating a reference position of the crank shaft, whereby a particular cylinder is specified by counting the number of outputs of a magnetic sensor corresponding to the second track (42) from the time point of appearance or disappearance of an output of a magnetic sensor corresponding to the third track (43).

4. A crank angle sensor as defined in claim 1, wherein the magnetic sensor (200) has a second pair of magnetoresistive elements (Rec, Red) spaced about half of the pitch P from the first pair (Rea, Reb) in the direction of the relative motion of the magnetic sensor and the four magnetic sensors and the four magnetic reluctance elements of said two pairs form a bridge circuit from output terminals (Oeo, Oco) from which the detected output voltage is delivered.

5. A crank angle sensor as defined in claim 1, wherein said magnetic recording medium includes a third track (53), said third track (53) being provided with said unit magnetic poles in a part corresponding to that part of the second track (52) in which no unit magnetic poles are provided, and the four magnetoresistive elements (Rea, Reb; Rec, Red.) of magnetic sensores corresponding to said two tracks (52, 53) forming a bridge circuit from the output terminals (Oeo, Oco) of which the detected output voltage is delivered.

**Revendications**

1. Capteur de l'angle d'un vilebrequin servant à produire des signaux représentatifs de la rotation d'un vilebrequin d'un moteur à combustion interne possédant une pluralité de cylindres, comprenant:

un support d'enregistrement magnétique (30) accouplé au vilebrequin de manière à tourner en synchronisme avec ce dernier et contenant une pluralité de pistes d'enregistrement incluant une première piste (31), sur laquelle des données sont enregistrées magnétiquement sous la forme de pôles magnétiques unitaires, les pôles magnétiques de la première piste (31) possédant un pas P correspondant à l'angle de rotation du vilebrequin; et

un capteur magnétique (4) espacé par rapport audit support d'enregistrement magnétique (30) et contenant des éléments magnéto-résistifs (Re1, Re2; Rc1, Rc2) disposés de manière à être couplés magnétiquement audit support d'enregistrement magnétique (30), ce capteur traitant des signaux de sortie des éléments magnéto-résistifs pour produire les signaux représentatifs de l'angle de rotation du vilebrequin,

caractérisé en ce

que des données se présentant sous la forme de pôles magnétiques unitaires sont enregistrées magnétiquement sur une seconde piste (32), les pôles magnétiques de la seconde piste (32) étant séparés par le pas P et répartis en des emplacements prescrits le long de la seconde piste (32) selon des ensembles respectifs correspondant au nombre des différents cylindres du moteur, les polarités magnétiques des pôles magnétiques étant orientées de la même manière que celles des pôles magnétiques respectifs de la première piste (31), et que les éléments magnétorésistifs dudit capteur magnétique sont réalisés sous la forme de plusieurs couples d'éléments (Re1, Re2; Rc1, Rc2), qui font face à des pistes d'enregistrement correspondantes, les éléments magnétorésistifs de chaque couple étant espacés les uns des autres respectivement d'une distance égale à la moitié du pas P dans la direction du déplacement relatif entre ledit support d'enregistrement magnétique (30) et ledit capteur magnétique (4), ledit capteur magnétique (4) pouvant produire des signaux indiquant les cylindres respectifs du moteur, en plus des signaux représentant l'angle de rotation du vilebrequin.

2. Capteur de l'angle d'un vilebrequin selon la revendication 1, dans lequel les pôles magnétiques unités sont prévus en des nombres différents aux emplacements respectifs répartis de la seconde piste (32), un cylindre particulier étant spécifié par la mesure de la durée d'un signal de sortie d'un capteur magnétique correspondant à la seconde piste, au moyen d'un signal de sortie d'un capteur magnétique correspondant à la première piste (31).

3. Capteur de l'angle d'un vilebrequin selon la revendication 1, dans lequel ledit support d'enregistrement magnétique (40) comprend en outre une troisième piste (43), sur laquelle des données sont enregistrées magnétiquement sous la forme de pôles magnétiques unitaires, ledit capteur magnétique (4) pouvant produire des signaux indiquant une position de référence du vilebrequin, tandis qu'un signal particulier est spécifié par comptage du nombre des signaux de sortie d'un capteur magnétique correspondant à la seconde piste (42), à partir de l'instant d'apparition ou de suppression d'un signal de sortie d'un capteur magnétique correspondant à la troisième piste (43).

4. Capteur de l'angle d'un vilebrequin selon la revendication 1, dans lequel le capteur magnétique (200) possède un second couple d'éléments magnéto-résistifs (Rec, Red) séparés, par une distance égale à environ à la moitié du pas P, du premier couple (Rea, Reb) dans la direction de déplacement relatif du capteur magnétique, et les quatre capteurs magnétiques et les quatre éléments présentant une reluctance magnétique desdits deux couples forment un circuit en pont, dont les bornes de sortie (Oeo, Oco) délivrent la tension de sortie détectée.

5. Capteur de l'angle d'un vilebrequin selon la revendication 1, dans lequel ledit support d'enregistrement magnétique comprend une troisième piste (53), ladite troisième piste (53) comportant lesdits pôles magnétiques unités dans une partie correspondant à la partie de la seconde piste (52), dans laquelle aucun pôle magnétique unité n'est prévu, et les quatre éléments magnéto-résistifs (Rea, Reb; Rec, Red) de capteurs magnétiques correspondant aux deux pistes (52,53) forment un circuit en pont dont les bornes de sortie (Oeo, Oco) délivrent la tension de sortie détectée.

**Ansprüche**

1. Drehwinkelsensor zum Erzeugen von Signalen, die die Drehung einer Kurbelwelle eines Verbrennungsmotors mit einer Vielzahl von Zylindern darstellen, der aufweist:
ein magnetisches Aufzeichnungsmedium (30), das mit der Kurbelwelle gekoppelt ist, um sich synchron damit zu drehen, und das eine Vielzahl von Aufzeichnungsspuren mit einer ersten Spur (31) enthält, auf der Daten in der Form von einheitlichen magnetischen Polen magnetisch aufgezeichnet werden, wobei die magnetischen Pole der ersten Spur (31) einen Abstand P haben, der dem Drehwinkel der Kurbelwelle entspricht; und
einen magnetischen Sensor (4), der von dem magnetischen Aufzeichnungsmedium (30) beabstandet ist und Magneto-Widerstandselemente (Re1, Re2; Rc1, Rc2) enthält, die angeordnet sind, um mit dem magnetischen Aufzeichnungsmedium (30) magnetisch gekoppelt zu sein, das Ausgangssignale der Magneto-Widerstandselemente verarbeitet, um die Signale herzustellen, die den Drehwinkel der Kurbelwelle darstellen,
**dadurch gekennzeichnet,**
daß Daten in der Form einheitlicher magnetischer Pole auf einer zweiten Spur (32) magnetisch aufgezeichnet werden, wobei jeder der magnetischen Pole der zweiten Spur (32) den Abstand P zwischen ihren Polen hat und bei vorgeschriebenen Orten entlang der zweiten Spur (32) in jeweiligen Mannigfaltigkeiten verteilt sind, die der Anzahl der mehreren Zylinder des Motors entsprechen, wobei die magnetischen Polaritäten davon auf dieselbe Weise ausgerichtet sind, wie jene der jeweiligen magnetischen Pole der ersten Spur (31), und daß die Magneto-Widerstandselemente des Magnetsensors in mehreren Paaren von Elementen (Re1, Re2; Rc1, Rc2) ausgebildet sind, die den entsprechenden Elementen der Aufzeichnungsspuren gegenüberstehen, wobei die Magneto-Widerstandselemente jedes Paars voneinander beabstandet sind, und zwar effektiv um eine Hälfte des Abstands P in der Richtung einer relativen Bewegung zwischen dem magnetischen Aufzeichnungsmedium (30) und dem magnetischen Sensor (4), wodurch der magnetische Sensor (4) Signale erzeugen kann, die die jeweiligen Zylinder des Motors zusätzlich zu den Signalen anzeigen, die den Drehwinkel der Kurbelwelle darstellen.

2. Drehwinkelsensor nach Anspruch 1, wobei an den jeweiligen geteilten Orten der zweiten Spur (32) die einheitlichen Magnetpole unterschiedlicher Anzahl vorgesehen sind, wodurch ein bestimmter Zylinder durch Messen der Dauer eines Ausgangs eines magnetischen Sensors bestimmt wird, der der zweiten Spur entspricht, und zwar mittels eines Ausgangs eines magnetischen Sensors, der der ersten Spur (31) entspricht.

3. Drehwinkelsensor nach Anspruch 1, wobei das magnetische Aufzeichnungsmedium (40) weiterhin eine dritte Spur (43) enthält, auf der Daten in der Form einheitlicher magnetischer Pole magnetisch aufgezeichnet werden, wodurch der magnetische Sensor (4) Signale erzeugen kann, die eine Bezugsposition der Kurbelwelle anzeigen, wodurch ein bestimmter Zylinder durch Zählen der Anzahl von Ausgängen eines magnetischen Sensors bestimmt wird, der der zweiten Spur (42) entspricht, und zwar von dem Zeitpunkt eines Auftretens oder eines Verschwindens eines Ausgangs eines magnetischen Sensors an, der der dritten Spur (43) entspricht.

4. Drehwinkelsensor nach Anspruch 1, wobei der magnetische Sensor (200) ein zweites Paar Magneto-Widerstandselemente (Rec, Red) aufweist, die um etwa eine Hälfte des Abstands P von dem ersten Paar (Rea, Reb) in der Richtung der relativen Bewegung des magnetischen Sensors beabstandet sind, und die vier magnetischen Sensoren und die vier magnetischen Reluctanz-Elemente der zwei Paare bilden eine Brückenschaltung von Ausgangsanschlüssen (Oeo, Oco), von denen die erfaßte Ausgangsspannung geliefert wird.

5. Drehwinkelsensor nach Anspruch 1, wobei das magnetische Aufzeichnungsmedium eine dritte Spur (53) enthält, wobei die dritte Spur (53) mit den einheitlichen magnetischen Polen in einem Teil ausgestattet ist, der jenem Teil der zweiten Spur (52) entspricht, in dem keine einheitlichen magnetischen Pole vorgesehen sind, und die vier Magneto-Widerstandselemente (Rea, Reb; Rec, Red) von magnetischen Sensoren die den zwei Spuren (52, 53) entsprechen, die eine Brückenschaltung von den Ausgangsanschlüssen (Oeo, Oco) bilden, von denen die erfaßte Ausgangsspannung geliefert wird.

*FIG. 1*

*FIG. 2*

*FIG. 3*

## FIG. 4

(A)  Re1

(B)  Re2

(C)  Rc1

(D)  Rc2

(E)  ee

(F)  Oe

(G)  ec

(H)  Oc

## FIG. 5

63 OSMV

RESET

Oc

Oe

62

COUNTER — 61

DECODER — 64

— 65

## FIG. 6

P

41 — S S N N S S N N S S N N S S N N S S N N S S N N S S N N S S N N | Re1 — Re2

42 — S N N S S N N S   S N N S S N N | Rc1 — Rc2

43 — S S N N S S N N S S N N S S N N S N | Ro1 — Ro2

40

100

P/2

## FIG. 7

Re1  Rf1  Rc1  Rf3  Ro1  Rf5

44 — Oe
45 — Oc
46 — Oo

a  b  c  d  e  f

V

Re2  Rf2  Rf4  Rc2  Rf6  Ro2

## FIG. 8

(A)  Re1

(B)  Re2

(C)  Rc1

(D)  Rc2

(E)  Ro1

(F)  Ro2

(G)  ee

(H)  Oe

(I)  ec

(J)  Oc

(K)  eo

(L)  Oo

12

# FIG. 9

# FIG. 10

# FIG. 11

(A)  Rea, Rec

(B)  Reb, Red

(C)  Rca

(D)  Rcd

(E)  Rcc

(F)  Rcd

(G)  ee

(H)  Oe

(I)  ec

(J)  Oc